# EUROPÄISCHE PATENTSCHRIFT

(11) **EP 2 035 801 B1**
(45) Veröffentlichungstag und Bekanntmachung des Hinweises auf die Patenterteilung: **09.08.2017**
(21) Anmeldenummer: 07764376.5
(22) Anmeldetag: 15.06.2007
(51) Int. Cl.: G01M 11/00, G01M 11/08

(54) **ANORDNUNG MIT EINEM LICHTLEITER**
ARRANGEMENT COMPRISING A FIBER-OPTIC WAVEGUIDE
ENSEMBLE À GUIDE D'ONDES OPTIQUES

(30) Priorität: 26.06.2006 DE 102006029204
(43) Veröffentlichungstag der Anmeldung: 18.03.2009
(73) Patentinhaber: OSRAM Opto Semiconductors GmbH, 93055 Regensburg (DE)
(72) Erfinder: HÄRLE, Volker, 93164 Laaber (DE); LELL, Alfred, 93142 Maxhütte-Haidhof (DE); OTT, Hubert, 93077 Bad Abbach (DE); STATH, Norbert, 93049 Regensburg (DE); STRAUSS, Uwe, 93077 Bad Abbach (DE)
(74) Vertreter: Epping - Hermann - Fischer
(86) Internationale Anmeldenummer: PCT/DE2007/001060
(87) Internationale Veröffentlichungsnummer: WO 2008/000222

(56) Entgegenhaltungen:
- EP-A- 0 320 108
- WO-A1-2006/011571
- DE-B3-102004 010 275
- FR-A- 2 500 638
- GB-A- 2 077 471
- JP-A- 59 068 702
- JP-A- 61 091 536
- US-A- 4 298 794
- US-A- 5 729 012

## Beschreibung

Die Erfindung betrifft Anordnungen mit einem Lichtleiter.

Lichtleiter, die zur Leitung von Strahlung oder Licht verwendet werden, können brechen, bzw. beschädigt werden.

Die Druckschrift EP 0 320 108 A2 beschreibt eine Vorrichtung zum Detektieren einer Bruchstelle in einer optischen Faser. Ein Detektor ist in einer Hülle der Faser angeordnet und erfasst eine Veränderung in der Transmission der optischen Energie in der Faser.

Die Druckschrift US 5,729,012 A beschreibt eine Testanordnung für eine optische Faser mit einer Primärlichtquelle und einer Testlichtquelle, welche Licht unterschiedlicher Wellenlängen abstrahlen. In einem Testbetrieb wird Licht von der Testlichtquelle durch die optische Faser an einen Konverter und zurück an einen Detektor geleitet.

Die Druckschrift WO 2006/011571 A1 beschreibt eine Anordnung mit einer Lichtquelle und einen Lichtleiter mit einem wellenlängenselektiven Element und einem Konverter, wobei konvertierte Strahlung von der Anordnung abgestrahlt wird, ohne dass diese in den Lichtleiter eingekoppelt wird.

Die Aufgabe von bestimmten Ausführungsformen der Erfindung besteht darin, eine verbesserte Anordnung mit einem Lichtleiter zur Verfügung zu stellen.

Diese Aufgabe wird gelöst durch eine Anordnung nach Anspruch 1. Weitere Ausgestaltungen der Anordnung sowie Licht emittierende Vorrichtungen mit der Anordnung sind Gegenstand weiterer Ansprüche.

Die Anordnung ist ausgebildet als lichtemittierende Vorrichtung mit einem Lichtleiter und einer Detektionsvorrichtung,
- wobei der Lichtleiter einen Kernbereich, und einen, den Kernbereich umgebenden Mantelbereich umfasst, und der Kernbereich einen höheren Brechungsindex aufweist als der Mantelbereich, und
- bei der die Detektionsvorrichtung eine Beschädigung des Lichtleiters detektieren kann.

Bei einer derartigen Anordnung kann der Kernbereich des Lichtleiters z. B. mittels Reflexion und Interferenz aufgrund des Brechungsindex-Sprungs vom Kern- zum Mantelbereich Licht bzw. Strahlung, z. B. kurzwellige Strahlung wie UV-Strahlung leiten. Aufgrund der Detektionsvorrichtung kann eine Beschädigung des Lichtleiters zuverlässig detektiert werden.

Bei einer weiteren Ausführungsform der Erfindung weist die Anordnung eine erste elektrisch leitfähige Verbindung als Bestandteil der Detektionsvorrichtung auf, die auf oder im Lichtleiter, z. B. im oder auf dem Mantelbereich des Lichtleiters verläuft wobei die Funktionsfähigkeit dieser ersten elektrisch leitenden Verbindung die Funktionsfähigkeit des Lichtleiters anzeigt. Weiterhin können dann Mittel zur Überprüfung der Funktionsfähigkeit dieser ersten elektrisch leitenden Verbindung vorhanden sein, wobei die Funktionsfähigkeit der ersten elektrisch leitfähigen Verbindung die Funktionsfähigkeit des Lichtleiters anzeigt.

Im Falle eines kabelförmigen Lichtleiters, beispielsweise eines Lichtleitstabes oder einer Glasfaser, verläuft die erste elektrisch leitfähige Verbindung vorteilhaft entlang der Hauptachse des Lichtleiters und kann somit besonders empfindlich Beschädigungen des Lichtleiters anzeigen. Mittel zur Überprüfung der Funktionsfähigkeit dieser ersten elektrisch leitfähigen Verbindung können beispielsweise eine Stromversorgung umfassen, die einen elektrischen Puls in die erste elektrisch leitfähige Verbindung, beispielsweise einen Draht gibt, und somit dessen Länge über den Verlauf des Lichtleiters überprüft. Die Länge der ersten elektrisch leitfähigen Verbindung, beispielsweise des Drahtes, wird dann über die Pulsreflexion am anderen Drahtende und die Laufzeit bestimmt.

Weiterhin ist es möglich, dass zusätzlich eine zweite elektrisch leitfähige Verbindung durch den Lichtleiter verläuft, die mit der ersten elektrisch leitfähigen Verbindung einen Stromkreis bildet und weiterhin die Mittel zur Überprüfung der Funktionsfähigkeit dieser ersten elektrisch leitfähigen Verbindung eine Vorrichtung umfassen, die den im Stromkreis fließenden Strom detektieren kann. Dies kann beispielsweise eine Transistorschaltung sein, die nur dann die Strahlungsquelle mit Energie versorgt, wenn der Stromkreis geschlossen ist und somit die Unversehrtheit des Lichtleiters anzeigt. Die erste und zweite elektrisch leitfähige Verbindung können beispielsweise an dem Ende des Lichtleiters, an dem das Konvertermaterial angeordnet ist, zu einer Stromschleife zusammengeführt werden, zum Beispiel mittels einer Metallhülse oder eines Metallrings.

Möglich ist auch, dass die zweite elektrisch leitfähige Verbindung durch den Lichtleiter im Abstand zur ersten elektrisch leitfähigen Verbindung verläuft und die Mittel zur Überprüfung der Funktionsfähigkeit der ersten elektrisch leitenden Verbindung eine zwischen der ersten und zweiten elektrischen Verbindung anliegende Spannung detektieren können. Beispielsweise kann der Kondensatoreffekt zwischen den voneinander beabstandeten ersten und zweiten elektrisch leitfähigen Verbindung gemessen werden und somit über eine Kapazitätsänderung beziehungsweise RC-Resonanzverschiebung die Unversehrtheit des Lichtleiters überprüft werden.

Vorteilhafterweise sind die elektrisch leitfähigen Verbindungen bzw. die nur eine elektrisch leitfähige Verbindung spröder als der Kernbereich. In diesem Falle ist dann gewährleistet, dass bei mechanischer Belastung die elektrisch leitfähigen Verbindungen unterbrochen werden, noch bevor der Lichtleiter bricht oder beschädigt wird. Die elektrisch leitfähigen Verbindungen können dabei auch auf oder im Mantelbereich des Lichtleiters verlaufen, oder z. B. zwischen dem Mantelbereich und dem Kernbereich verlaufen.

Unter Sprödigkeit versteht man allgemein die Eigenschaft von Festkörpern, unter Beanspruchung zu Zerbrechen anstatt plastische oder elastische Deformation zu erleiden. In diesem Zusammenhang wird auf das Stichwort "Sprödigkeit" im Römpp Chemielexikon, 9. erweiterte und neu bearbeitete Auflage, Georg-Thieme-Verlag Stuttgart, verwiesen, auf dass hiermit voll inhaltlich Bezug genommen wird.

Der Lichtleiter weist ein erstes Ende und ein zweites Ende auf, wobei am zweiten Ende ein Konvertermaterial vorhanden ist, das durch den Lichtleiter transportierte Strahlung einer ersten Wellenlänge in Licht einer zweiten Wellenlänge konvertiert, und am ersten Ende ein erster Detektor als Bestandteil der Detektionsvorrichtung vorhanden ist, der das Licht der zweiten Wellenlänge detektiert. Ein Teil des Lichts der zweiten Wellenlänge wird durch optische Rückkopplung durch den Lichtleiter transportiert und dann vom ersten Detektor detektiert.

Eine Strahlungsquelle ist am ersten Ende des Lichtleiters vorhanden, die die Strahlung der ersten Wellenlänge emittiert.

Bei der oben genannten Konversion der Strahlung erster Wellenlänge, bevorzugt kurzwellige Strahlung wie z. B. UV-Strahlung kann das mittels des Konvertermaterials erzeugte Licht der zweiten, längeren, z. B. sichtbaren Wellenlänge von dem Konvertermaterial isotrop in alle Richtungen emittiert werden. Bei der Konversion kann es zu einer Einkopplung von konvertierten Licht in den Lichtleiter kommen, wobei dieses konvertierte Licht durch den Lichtleiter hindurch wieder zum ersten Detektor am anderen Ende des Lichtleiters transportiert wird. In diesem Fall zeigt eine Detektion von konvertiertem Licht durch den ersten Detektor an, dass der Lichtleiter funktionsfähig und unversehrt ist. In dem Fall, dass kein konvertiertes Licht mehr durch den ersten Detektor detektiert wird, ist davon auszugehen, dass beispielsweise aufgrund eines Bruchs des Lichtleiters ein Transport des konvertierten Lichts vom Konvertermaterial zum ersten Detektor nicht mehr möglich ist. In diesem Fall ist es dann besonders vorteilhaft, wenn der erste Detektor beziehungsweise die Detektionsvorrichtung eine Energieversorgung der Strahlungsquelle ausschalten kann. Die Detektionsvorrichtung ist Bestandteil einer Schaltungsanordnung, die eine Energieversorgung der Strahlungsquelle mit Strom versorgt und die bei fehlender Detektion des konvertierten Lichts einen Stromkreis unterbricht. Weiterhin besteht die Möglichkeit, dass die Strahlungsquelle, zum Beispiel eine UV-Laserdiode mit kleiner Leistung beim Anschalten der Licht emittierenden Vorrichtung angeschaltet wird und dann beim Hochfahren des Lasers die ursprüngliche Einschaltvorrichtung für den Laser deaktiviert wird und stattdessen eine Steuerungsschaltung, bei der die Detektionsvorrichtung eine Komponente bildet, die Steuerung des Lasers übernimmt. Somit wird dann der Laser nur noch in Abhängigkeit von einer erfolgten Detektion des konvertierten Lichts durch die Detektionsvorrichtung betrieben und kann bei nicht mehr vorhandener Detektion des konvertierten Lichts sofort abgeschaltet werden.

Beispielsweise kann der erste Detektor an ein Ende eines Lichtleiters lichtleitend angekoppelt sein, wobei am anderen Ende dieses Lichtleiters dann das Konvertermaterial angeordnet ist. Dieser Lichtleiter kann Bestandteil eines größeren Lichtleiterverbundes, beispielsweise eines Lichtleiterbündels, sein. In diesem Fall können dann die anderen Lichtleiter dieses Bündels mit der Strahlungsquelle verbunden sein und z. B. nur diese eine Lichtleiterfaser mit dem ersten Detektor verbunden sein. Es ist auch möglich einen Strahlteiler im Lichtleiter anzubringen, der zumindest Teile des durch den Lichtleiter rücktransportierten konvertierten Lichts zu dem ersten Detektor leitet.

Die Strahlungsquelle und der erste Detektor sind am gleichen Ende des Lichtleiters beziehungsweise Lichtleiterbündels vorhanden. So kann über Rückreflexion des durch das Konvertermaterial konvertierten sichtbaren Lichts besonders einfach die Funktionsfähigkeit des Lichtleiters über praktisch seine gesamte Länge detektiert werden. Weiterhin ist dann auch eine hohe Gestaltungsfreiheit der Optik, z. B. des optischen Bauteils oder des transparenten Körpers am anderen Ende des Lichtleiters möglich.

Weiterhin können zwischen dem Ende des Lichtleiters und dem Konvertermaterial auch ein oder mehrere Beschichtungen, z. B. dielektrische Spiegel oder andere Reflexionsschichten vorhanden sein, die transparent für die Strahlung erster Wellenlänge sind, aber Teile des konvertierten Lichts der zweiten Wellenlänge reflektieren. Beispielsweise besteht die Möglichkeit, dass der oder die dielektrischen Spiegel die Rotanteile des konvertierten Lichts rückreflektieren mit der Folge das die Emission aus dem Lichtleiter verstärkt wird, aber Gelbanteile nicht reflektieren, wobei diese Gelbanteile dann durch den Lichtleiter rückgekoppelt werden und z. B. vom ersten Detektor detektiert werden können. Es ist aber auch möglich, die Reflexionsschicht so zu gestalten, dass sie transparent für die Strahlung erster Wellenlänge ist, aber einen prozentualen Anteil des Wellenlängenbereiches des Lichtes zweiter Wellenlänge reflektiert, während der andere Teil wieder in den Lichtleiter eingekoppelt wird.
Bei beiden Möglichkeiten wird die Strahlungseffizienz der Vorrichtung durch eine Verringerung der Rückkopplung von konvertierter Strahlung zweiter Wellenlänge in den Lichtleiter zurück, erhöht.

Weiterhin ist es möglich, dass zusätzlich ein zweiter Detektor zur Detektion von Umgebungslicht vorhanden ist. Ein derartiger Detektor kann beispielsweise das durch einen nicht mit der Strahlungsquelle verbundenen Lichtleiter transportierte Umgebungslicht detektieren und als Referenz und Bezugspunkt für das vom ersten Detektor detektierte konvertierte Licht dienen. Mittels des ersten und zweiten Detektors ist es somit einfacher möglich, die Empfindlichkeit der Detektion des konvertierten Lichts zu steigern und somit ein Kontrollsystem für die Funktionsfähigkeit des Lichtleiters zu erhalten, das besonders empfindlich ist.

Die Effizienz der Lichtkonversion kann bei dieser Licht emittierenden Vorrichtung dadurch erhöht sein, dass das Konvertermaterial nicht in unmittelbarer Nähe der Strahlung emittierenden Strahlungsquelle angeordnet ist, sondern durch den Lichtleiter von der Strahlungsquelle getrennt ist. Dadurch kann beispielsweise eine Reabsorption des konvertierten Lichts der längeren, zweiten Wellenlänge durch die Strahlungsquelle vermindert werden. Weiterhin wird der Ort der Erzeugung des sichtbaren Lichts von dem Ort der Wärmeerzeugung, der Strahlungsquelle räumlich getrennt, mit der Folge, dass die Betriebstemperatur des Konvertermaterials gesenkt werden kann, was deren Zuverlässigkeit erhöhen kann. Eine derartige Beabstandung des Konvertermaterials von der Strahlungsquelle kann auch als "remote phosphor configuration" bezeichnet werden. Durch die Konversion kann die Strahlung der ersten Wellenlänge in - bevorzugt sichtbares Licht- einer zweiten Wellenlänge konvertiert werden, wobei die zweite Wellenlänge größer ist als die erste Wellenlänge der anregenden Strahlung.

Bei einer weiteren Ausführungsform der Erfindung emittiert die Strahlen emittierende Strahlungsquelle kurzwellige Strahlung im Bereich von 210 bis 500 nm, bevorzugt im Bereich von 210 nm bis 420 nm, weiter bevorzugt im Bereich von 360 nm bis 420 nm oder im eher blauen Bereich von etwa 420 nm bis 500 nm.

Das Vorhandensein der Anordnung aus dem Lichtleiter und der Detektionsvorrichtung, die eine Beschädigung des Lichtleiters detektieren kann, kann bei kurzwelligen Strahlungsquellen (z. B. UV-Strahlungsquellen) besonders vorteilhaft sein, da dadurch schnell detektiert werden kann, ob der Lichtleiter beschädigt ist und damit auch für den Betrachter eventuell schädliches kurzwelliges Licht nach außen abgestrahlt wird.

Besonders vorteilhaft kontrolliert die Detektionsvorrichtung, die eine Beschädigung des Lichtleiters detektieren kann, auch eine Energieversorgung (Strom- und/oder Spannungsversorgung) für die bevorzugt kurzwellige Strahlung emittierende Strahlungsquelle und kann somit bei Beschädigung des Lichtleiters die Energieversorgung abstellen, mit der Folge, dass auch die potentiell gefährliche Emission von kurzwelliger Strahlung aus dem beschädigten Lichtleiter unterbrochen wird. Eine derartige Kontrolle ist aber auch bei einer Strahlungsquelle möglich, die nicht kurzwellige Strahlung sondern z. B. Licht sichtbarer Wellenlänge emittiert.

Weiterhin kann die Strahlungsquelle auch hochenergetisches Licht im sichtbaren Blau-Bereich von etwa 400 bis 450 nm emittieren. Das nach der Konversion ausgestrahlte -bevorzugt sichtbare- konvertierte Licht der zweiten Wellenlänge weist dabei eine längere Wellenlänge auf als die ursprünglich von der Strahlungsquelle emittierte Strahlung und kann in Abhängigkeit von dieser Strahlung in einem Wellenlängenbereich von 400 bis 800 nm liegen.

Das Konvertermaterial kann dabei insbesondere ein Leuchtstoff sein, der durch die von der Strahlungsquelle emittierte Strahlung angeregt werden kann, beispielsweise zu Fluoreszenz. Im nahen UV können beispielsweise Leuchtstoffe auf Oxidbasis, wie zum Beispiel Barium-Magnesium-Aluminate, die mit Europium dotiert sind, verwendet werden, wie zum Beispiel BaMgAl₁₀O₁₇:Eu²⁺. Verwendet werden können auch Strontium-Magnesium-Aluminate, die ebenfalls mit Europium dotiert sind, wie zum Beispiel SrMgAl₁₀O₁₇:Eu²⁺ sowie Chlorapatite mit Strontium, Barium oder Calcium der Formel (Sr, Ba, Ca)₅(PO₄)₃Cl:Eu²⁺. Es können auch Bariumaluminate, zum Beispiel Ba₃Al₂₈O₄₅:Eu²+ verwendet werden. All die genannten Verbindungen emittieren Licht im blauen Wellenlängenbereich, wenn sie im nahen UV gepumpt werden. Grün emittierende Leuchtstoffe sind beispielsweise SrAl₂O₄:Eu²⁺. Grün bis grüngelb emittierende Leuchtstoffe sind beispielsweise Chloro-Silikate der Formel Ca₈Mg(SiO₄)₄Cl₂:Eu²⁺, Mn²⁺, die mit Europium oder Mangan dotiert sind, sowie Thiogallate der allgemeinen Formel AGa₂S₄:Eu²⁺, Ce²⁺, wobei A ausgewählt sein kann aus Calcium, Strontium, Barium, Zink und Magnesium. Weiterhin können als rot emittierende Leuchtstoffe und Konvertermaterialien beispielsweise Erdalkali-substituierte Strontium-Sulfide der allgemeinen Formel ((A, Sr)S:Eu²⁺ mit A= Erdalkalimetallionen, sowie Nitridosilikate der Formel M₂Si₅N₅N₈:Eu²⁺ mit M = Ca oder Sr verwendet werden.

Die Konvertermaterialien, beziehungsweise Leuchtstoffe können auch derart eingesetzt werden, dass diese bei Anregung mit kurzwelliger Strahlung sichtbares Weißlicht emittieren und es somit zu einer Konversion der kurzwelligen Strahlung in sichtbares Weißlicht kommt. Eine Mischung von beispielsweise 47 Gew-% Strontium-Chlorapatit, 48 Gew-% Strontium-Aluminat und 5 Gew-% Nitridosilikate kann bei einer Anregung bei 405 nm Weißlicht mit einem Farbort x = 0,354 und y = 0,386 in der CIE-Norm Farbtafel emittieren. Bei weiteren Ausführungsformen der Erfindung kann durch die Konversion der Strahlung erster Wellenlänge auch sichtbares Licht der zweiten Wellenlänge resultieren, dass keinen Weislichteindruck beim Betrachter hinterlässt, sondern z. B. gelb, grün rot oder eine andere beliebige Farbe aufweist. Die lichtemittierende Vorrichtung emittiert Licht, das eine Mischung aus Strahlung der ersten Wellenlänge und aus dem konvertierten Licht der zweiten Wellenlänge ist oder konvertiertes Licht der zweiten Wellenlänge ist.

Der Lichtleiter kann beispielsweise Fasern umfassen, die ein Material enthalten, das ausgewählt ist aus Glas und Kunststoff. Somit kann der Lichtleiter auch Glasfaserkabel oder Lichtleitstäbe umfassen. Zum Einkoppeln und zum Transport des von der Strahlungsquelle bei einigen Ausführungsformen der Erfindung emittierten kurzwelligen Lichts sind besonders gut Lichtleiter auf der Basis von Glas geeignet. Der Lichtleiter kann wie eine Faser aufgebaut sein, wobei ein Querschnitt durch eine derartige Faser einen Kernbereich mit hohen Brechungsindex zeigt, der von einem Mantelbereich mit geringeren Brechungsindex als der Kernbereich umgeben ist. Der Kernbereich ist dabei in der Lage eingekoppelte Moden von Licht und kurzwelliger Strahlung z. B. mittels Interferenz und Reflexion zu transportieren.

Bei einer weiteren Ausführung der Erfindung können auch mehrere Lichtleiter vorhanden sein, die beispielsweise zu einem Lichtleiterbündel zusammengefasst werden, wobei jeder einzelne Lichtleiter separat die von der Strahlungsquelle emittierte Strahlung erster Wellenlänge nach der Einkopplung zum Konvertermaterial transportieren kann. Eine weitere Ausführungsform einer erfindungsgemäßen Licht emittierenden Vorrichtung kann dabei auch mehrere Strahlungsquellen umfassen, wobei es beispielsweise möglich ist, dass für je einen Lichtleiter eine Strahlungsquelle vorhanden ist. Die von diesen Strahlungsquellen emittierte Strahlung erster Wellenlänge kann dann mittels der Lichtleiter in zum Beispiel einem Lichtleiterbündel gebündelt werden und nach dem Transport der Strahlung durch das Lichtleiterbündel mittels des Konvertermaterials in das Licht der zweiten, längeren Wellenlänge konvertiert werden. Dabei ist es auch möglich, dass die Strahlung der verschiedenen Strahlungsquellen, die in verschiedene Lichtleiter eingekoppelt wird, mittels unterschiedlicher Konvertermaterialien in sichtbares Licht unterschiedlicher zweiter Wellenlänge konvertiert wird, wobei durch eine Mischung dieses sichtbaren Lichts verschiedener Wellenlänge dann ein homogener Weißlichteindruck für den Betrachter resultiert. So können z. B. die noch weiter unter beschriebenen optische Bauteile und/oder transparenten Körper für ein derartige Mischung verwendet werden.

Es ist möglich, dass bei bestimmten lichtemittierenden Vorrichtungen mit Anordnungen aus dem Lichtleiter und der Detektionsvorrichtung der Lichtleiter ein erstes Ende und ein zweites Ende aufweist, wobei am ersten Ende des Lichtleiters eine Strahlungsquelle vorhanden ist, die Strahlung einer ersten Wellenlänge emittiert und am zweiten Ende zusätzlich ein optisches Bauteil vorhanden ist, das mit dem konvertierten Licht oder mit der aus dem Lichtleiter austretenden Strahlung wechselwirkt. Dieses optische Bauteil kann beispielsweise - falls das Konvertermaterial vorhanden ist- mit dem konvertierten Licht oder mit der aus dem Lichtleiter austretenden Strahlung erster Wellenlänge, z. B. kurzwellige Strahlung wie UV-Strahlung mittels Streuung, Brechung, Reflexion, Umlenkung oder Beugung wechselwirken. Das optische Bauteil kann beispielsweise eine Linse umfassen, die zum Beispiel das konvertierte Licht bündeln kann. Wenn die Licht emittierende Vorrichtung mehrere Lichtleiter enthält, die beispielsweise zu einem Bündel zusammengefasst sind, so kann dieses Bündel beispielsweise in eine gemeinsame Bohrung des optischen Bauteils gesteckt werden.

Bei einer weiteren Ausführungsform der Erfindung kann das Konvertermaterial an einem Ende des Lichtleiters angeordnet sein und dieses Ende im Brennpunkt des optischen Bauteils angeordnet sein.

Bei einer derartigen Licht emittierenden Vorrichtung wird dann das mittels des Konvertermaterials erzeugte sichtbare Licht längerer Wellenlänge parallel durch das optische Bauteil, beispielsweise eine Linse abgestrahlt, sodass eine parallele gerichtete Lichtemission des konvertierten Lichts in eine besondere Abstrahlrichtung möglich ist.

Weiterhin ist es auch möglich, dass das Ende des Lichtleiters mit dem Konvertermaterial außerhalb des Brennpunkts des optischen Bauteils angeordnet ist und dann beispielsweise zur Defokussierung des mittels Konversion erzeugten sichtbaren Lichts dienen kann. Auf diese Weise lässt sich z. B. die Abstrahlung einer Punklichtquelle, die durch die Konversion der z. B. UV-Strahlung zu sichtbarer Strahlung an einem Ende einer Glasfaser als Lichtleiter entstehen kann, aufweiten mit der Folge, dass dann auch eine größere Fläche durch die Punktlichtquelle beleuchtet werden kann.

Die Strahlungsquelle kann beispielsweise eine kurzwellige Strahlungsquelle, insbesondere eine UV-Laserdiode, zum Beispiel eine N-basierte Laserdiode wie z. B. eine InGaN-Laserdiode umfassen. Insbesondere können Materialien der allgemeinen Formel AlₓIn_{y}Ga_{z}N mit x, y, z ≥ 0 und x+y+z = 1 verwendet werden, z. B. eine Laserdiode mit einer Emissionswellenlänge von 365 nm bis 425 nm mit einem In-Gehalt von 0-10 Atom% in der lichterzeugenden Schicht (z. B. x = 0; y = 0-0,1; z = 0,9-1,0). UV-Laserdioden sind besonders gut geeignet, eine gerichtete UV-Strahlung zu emittieren, die gut in einen Lichtleiter eingekoppelt werden kann.

Erfindungsgemäße Licht emittierende Vorrichtungen können beispielsweise eine besonders gute optische Abbildungsqualität dadurch erreichen, dass eine helle, punktartige Lichtquelle dadurch realisiert wird, dass die Strahlung erster Wellenlänge (z. B. UV-Strahlung) der Strahlungsquelle durch einen Lichtleiter, der beispielsweise eine Glasfaser ist, transportiert wird. Besonders gute Punktlichtquellen lassen sich durch die Verwendung von UV-Lasern mit Lichtleitern und Konvertermaterialien erzielen. Punktlichtquellen weisen eine eng begrenzte räumliche Ausdehnung auf, wobei ein großer Kontrast zwischen beleuchten und nicht beleuchteten Bereichen vorhanden ist.

Die Strahlungsquelle kann zur Abfuhr der Verlustwärme beispielsweise mit einer Wärmesenke verbunden sein. Die Strahlungsquelle kann dabei direkt mit der Wärmesenke verbunden sein, oder in thermischen Kontakt mit ihr stehen.

In einer weiteren Ausführungsform von erfindungsgemäßen Licht emittierenden Vorrichtungen kann das Konvertermaterial Nanopartikel umfassen. Der Vorteil von Nanopartikeln kann darin bestehen, dass bei diesen die Lichtstreuung vermindert wird und so die Leuchtstärke des von dem Konvertermaterial emittierten sichtbaren Lichts gleichmäßiger wird. Vorteilhafterweise weisen die Nanopartikel Partikeldurchmesser auf, die bei einigen Nanometern liegen, beispielsweise zwischen 2 bis 50 nm, weiter bevorzugt zwischen 2 nm bis 10 nm, da derartig kleine Nanopartikel besonders gut eine Lichtstreuung des konvertierten sichtbaren Lichts vermindern. Weiterhin kann auch der Partikeldurchmesser die Wellenlänge des konvertierten Licht z. B. aufgrund des Quantengrößen-Effekts beeinflussen. So erzeugen Nanopartikel mit kleineren Durchmessern konvertiertes Licht mit kürzerer Wellenlänge im Vergleich zu Nanopartikeln mit größeren Durchmessern.

Bei einer weiteren Ausführungsform einer erfindungsgemäßen Licht emittierenden Vorrichtung ist ein Ende des Lichtleiters Licht leitend mit einem transparenten Körper verbunden. Beispielsweise ist es möglich, dass ein Ende des Lichtleiters von dem transparenten Körper umgeben ist und zum Beispiel in eine Bohrung des transparenten Körpers gesteckt werden kann. Bei dem transparenten Körper kann es sich beispielsweise um einen Glas- oder Kunststoffkörper handeln, wobei der transparente Körper sowohl ein Hohlkörper als auch massiv ausgebildet sein kann. Der transparente Körper ist vorteilhafterweise transparent für das konvertierte sichtbare Licht oder auch transparent für die durch den Lichtleiter transportierte Strahlung erster Wellenlänge, bevorzugt kurzwellige Strahlung wie UV-Strahlung. Auf zumindest Teilbereichen der Oberfläche des transparenten Körpers können eine kurzwellige Strahlung reflektierende Schicht bzw. eine Strahlung erster Wellenlänge reflektierende Schicht oder entsprechende Absorptionsschichten vorgesehen sein, um beispielsweise eine Emission von nicht konvertiertem kurzwelligen Licht aus der Licht emittierenden Vorrichtung heraus zu verhindern beziehungsweise zu vermindern.

Günstigerweise ist das Ende des Lichtleiters Licht leitend mit dem transparenten Körper verbunden oder von diesem umgeben, aus dem die in den Lichtleiter transportierte Strahlung der Strahlungsquelle austritt.

Weiterhin ist es möglich, dass an dem Ende des Lichtleiters, an dem der transparente Körper vorhanden ist, das Konversionsmaterial zur Konversion der Strahlung erster Wellenlänge (z. B. UV-Strahlung) in Licht einer zweiten Wellenlänge (z. B. sichtbares Licht) vorhanden ist.

Weiterhin kann zumindest auf Teilbereichen der Oberfläche des transparenten Körpers eine für das konvertierte Licht reflektierende Beschichtung angeordnet sein. Diese Beschichtung kann dann z. B. das mittels des Konversionsmaterials am Ende des Lichtleiters erzeugte konvertierte sichtbare Licht auf eine zu beleuchtende Fläche bündeln.

Weiterhin ist es möglich, dass der transparente Körper eine Lichtaustrittsfläche aufweist, deren geometrische Form weitestgehend die Form einer zu beleuchtenden Fläche bestimmt. Beispielsweise ist es möglich, eine runde, ovale oder beispielsweise rechteckige oder dreieckige Lichtaustrittsfläche an den transparenten Körper auszuformen, die dann eine dementsprechende Freiformfläche bilden, die zur Beleuchtung der Umgebung verwendet wird. Auf diese Art und Weise ist es beispielsweise möglich, Punktlichtquellen, die mittels Konversion erzeugtes sichtbares Licht am Ende des Lichtleiters emittieren, in größere Flächen abdeckende Flächenlichtquellen zu überführen. Der transparente Körper kann beispielsweise ein Paraboloid bilden, mit einer runden beziehungsweise ovalen Lichtaustrittsfläche, die dann eine entsprechende Flächenlichtquelle bildet. Beispielsweise kann der transparente Körper eine lang gestreckte, beispielsweise stabförmige Lichtaustrittsfläche aufweisen, die dann zur Beleuchtung größerer Flächen verwendet werden kann, als dies üblicherweise bei Punktlichtquellen der Fall ist.

Beispielsweise ist es möglich, dass in dem transparenten Körper zumindest ein Hohlraum vorhanden ist, in dem das Konvertermaterial angeordnet ist, wobei der Hohlraum lichtleitend mit dem Lichtleiter beziehungsweise einem Ende des Lichtleiters verbunden ist. Der Hohlraum kann beispielsweise lang gestreckt sein und sich dann entlang einer Hauptachse des ebenfalls lang gestreckten transparenten Körpers erstrecken und somit eine Aufweitung der Punktlichtquelle bedingen.

Beispielsweise kann auch in dem transparenten Körper ein lichtleitendes Medium, zum Beispiel ein Lichtleitstab oder ein Lichtleiter wie eine Glasfaser, vorhanden sein, der entlang der Hauptachse des transparenten Körpers verläuft, wobei dieses Licht leitende Medium lichtleitend mit dem Ende des Lichtleiters verbunden ist. Die Oberfläche eines derartigen Licht leitenden Mediums kann beispielsweise aufgeraut sein und somit eine Diffusorwirkung entfalten, mittels der besonders einfach das Licht von dem Licht leitenden Medium in den transparenten Körper ausgekoppelt werden kann. In dem Licht leitenden Medium beziehungsweise auf dessen Oberfläche kann das Konversionsmaterial angeordnet werden.

Das Konvertermaterial kann beispielsweise schichtförmig im Strahlengang der durch den Lichtleiter transportierten Strahlung erster Wellenlänge angeordnet sein. In diesem Fall wird günstigerweise die Strahlung durch einen Reflektor gebündelt und auf die Konverterschicht geleitet und dort erst in sichtbares Licht konvertiert.

Bei weiteren Ausführungsformen von erfindungsgemäßen Licht emittierenden Vorrichtungen ist eine Strahlung erster Wellenlänge reflektierende, für sichtbares Licht durchlässige Schicht im Strahlengang der Vorrichtung dem Konvertermaterial nachgeschaltet. Diese Schicht kann beispielsweise ein dielektrischer Spiegel für kurzwellige Strahlung sein. Eine derartige Schicht kann vorteilhafterweise eine Emission von nicht konvertierter kurzwelliger Strahlung aus der Licht emittierenden Vorrichtung verhindern und die nicht konvertierte kurzwellige Strahlung zurückreflektieren z. B. auf das Konvertermaterial. Durch eine derartige kurzwellige Strahlung reflektierende Schicht wird somit zum einen die Emission der potentiell schädlichen kurzwelligen Strahlung aus der Licht emittierenden Vorrichtung heraus vermindert beziehungsweise verhindert und gleichzeitig die Effizienz der Lichtkonversion durch die Rückreflexion gesteigert.

Gegenstand weiterer Ausführungsformen der Erfindung ist auch eine Beleuchtungsvorrichtung, die eine der oben genannten Licht emittierenden Vorrichtungen, insbesondere mit den erfindungsgemäßen Anordnungen, umfasst. Eine derartige Beleuchtungseinrichtung kann beispielsweise eine Lampe, Tischleuchte, Deckenleuchte oder beliebige andere Beleuchtungseinrichtungen sein.

Gegenstand einer weiteren Ausführungsform der Erfindung ist auch ein Display, das eine der oben genannten Licht emittierenden Vorrichtungen umfasst. Besonders vorteilhaft wird als eine Komponente eines derartigen Displays eine Licht emittierende Vorrichtung verwendet, die einen schmalen Lichtstreifen konvertierten Lichts emittiert. Ein derartiger Lichtstreifen ist zum Beispiel besonders zur Einkopplung in eine Glas-/ Kunststoffplatte zur LCD-Hinterleuchtung geeignet.

Somit sind Gegenstand der Erfindung nach weiteren Ausführungsformen auch Displays, bei denen die Hinterleuchtung eine Licht emittierende Vorrichtung wie oben beschrieben, enthält. Die Displays sind bevorzugt nicht selbst emissiv und sind zum Beispiel Flüssigkristalldisplays.

Gegenstand weiterer Ausführungsformen der Erfindung ist auch ein Fahrzeug mit einem Scheinwerfer, der eine Licht emittierende Vorrichtung wie oben beschrieben enthält. Das Fahrzeug kann z. B. ein Kraftfahrzeug oder Schienenfahrzeug sein und einen Motor mit einer Kühlung aufweisen. Dabei ist es vorteilhaft, wenn die Strahlungsquelle der Licht emittierenden Vorrichtung im thermischen Kontakt mit der Kühlung steht. In diesem Fall ist es besonders einfach möglich, nicht nur den Motor sondern auch die Strahlungsquelle der Licht emittierenden Vorrichtung mit der Kühlung zu kühlen.

Im Folgenden soll die Erfindung anhand von Ausführungsbeispielen und Figuren noch näher erläutert werden. Bei den Figuren handelt es sich um nicht maßstabsgetreue, schematische Zeichnungen. In den verschiedenen Figuren kennzeichnen mit gleichen Bezugszeichen versehene Elemente gleiche oder gleichwirkende Elemente.
- Die Figuren 1A bis 3B: zeigen Lichtleiter mit verschieden ausgestalteten elektrisch leitfähigen Verbindungen.
- Die Figuren 4 und 5: zeigen Vergleichsbeispiele von Licht emittierenden Vorrichtungen.
- Die Figuren 6 und 7: zeigen verschiedene Ausführungsformen von erfindungsgemäßen Licht emittierenden Vorrichtungen.
- Die Figuren 8 bis 11: zeigen weitere Ausführungsformen von erfindungsgemäßen Licht emittierenden Vorrichtungen mit einem transparenten Körper.
- Figur 12: zeigt schematisch ein Automobil mit einem Scheinwerfer, der eine erfindungsgemäße Licht emittierende Vorrichtung beinhaltet.

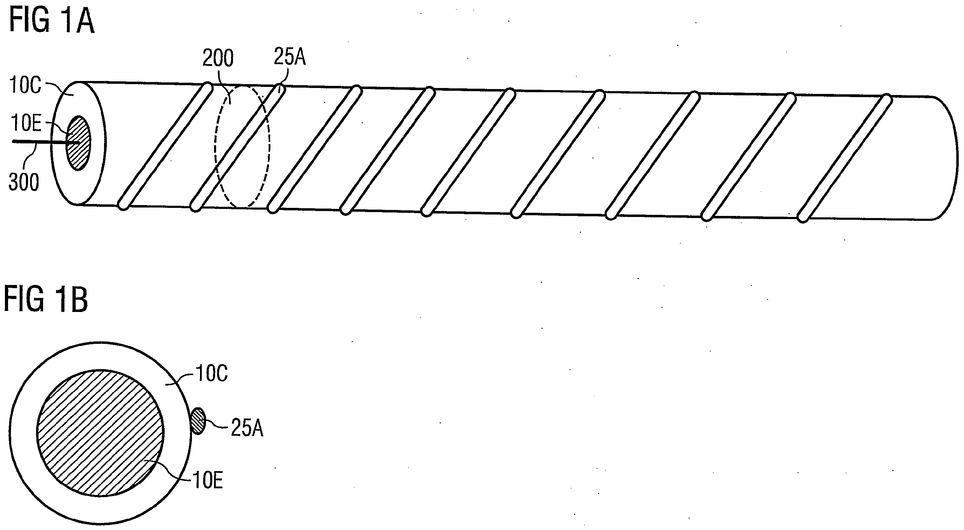

Die Figuren 1A und 1B zeigen einen Lichtleiter 10, der einen Kernbereich 10E, und einen, den Kernbereich 10E umgebenden Mantelbereich 10C umfasst, wobei der Kernbereich einen höheren Brechungsindex aufweist als der Mantelbereich. Der Kernbereich kann durch Reflexion und Interferenz Licht bzw. Strahlung, z. B. kurzwellige Strahlung wie UV-Strahlung leiten. Auf der Oberfläche des Mantelbereichs 10C ist eine erste elektrisch leitfähige Verbindung 25A vorhanden, die sich um den Mantelbereich windet bzw. umlaufend um dem Lichtleiter angeordnet ist und somit eine mögliche Beschädigung bzw. einen Bruch des Lichtleiters an den verschiedensten Stellen detektieren kann. Fig. 1B ist dabei ein Querschnitt durch den Lichtleiter an der mit 200 markierten Position. Anstatt von einer elektrisch leitfähigen Verbindung 25A könnten auch zwei elektrisch leitfähige Verbindungen derart auf dem Mantelbereich 10C verlaufen, wobei diese dann z. B. wie oben beschrieben einen geschlossenen Stromkreis bilden oder der Kondensatoreffekt zwischen den parallel verlaufenden Verbindungen bestimmt werden kann und so eine Beschädigung des Lichtleiters detektiert werden könnte.

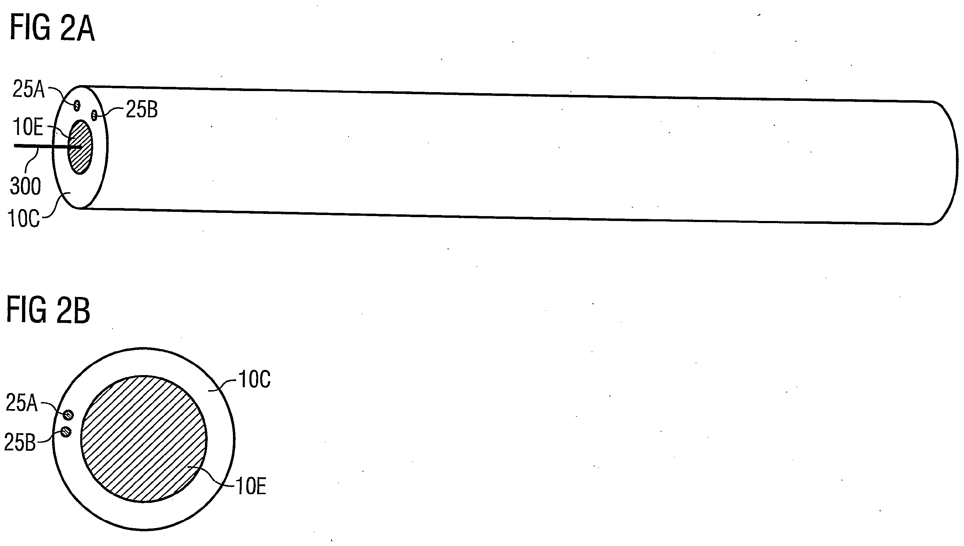

Im Gegensatz zu den Fig. 1A und 1B verlaufen bei dem in Fig. 2A und 2B gezeigten Lichtleiter eine erste elektrisch leitfähige Verbindung 25A und eine zweite elektrisch leitfähige Verbindung 25B im Mantelbereich 10C des Lichtleiters 10. Fig. 2B ist wieder ein Querschnitt durch den in Fig. 2A gezeigten Lichtleiter. Anstatt von zwei elektrisch leitfähigen Verbindungen 25A und 25B kann auch nur eine elektrisch leitfähige Verbindung durch den Mantelbereich 10C verlaufen. Die beiden elektrisch leitfähigen Verbindungen können dabei z. B. parallel zur Hauptachse 300 des Lichtleiters verlaufen, oder wie in Fig. 1A und 1B gezeigt auch um diese gewunden sein.

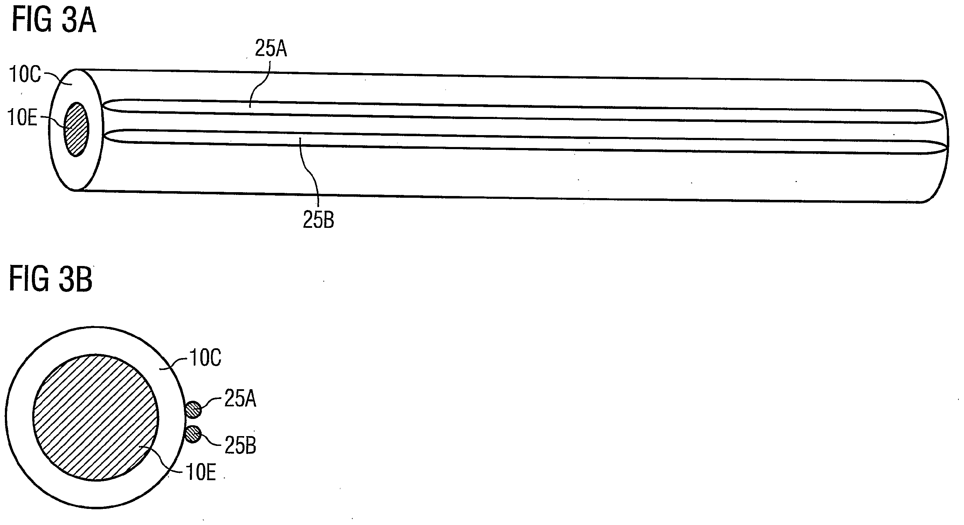

Bei dem in den Fig. 3A und im Querschnitt in Fig. 3B gezeigten Lichtleiter verlaufen eine erste elektrisch leitfähige Verbindung 25A und parallel dazu eine zweite elektrisch leitfähige Verbindung 25B auf der Oberfläche des Mantelbereichs 10C des Lichtleiters 10. Diese elektrisch leitfähigen Verbindungen können z. B. wie oben beschrieben zu einen Stromkreis zusammengeschlossen sein oder ein bei diesen parallelen Verbindungen auftretender Kondensatoreffekt kann gemessen werden und so eine Beschädigung des Lichtleiters zuverlässig detektiert werden.

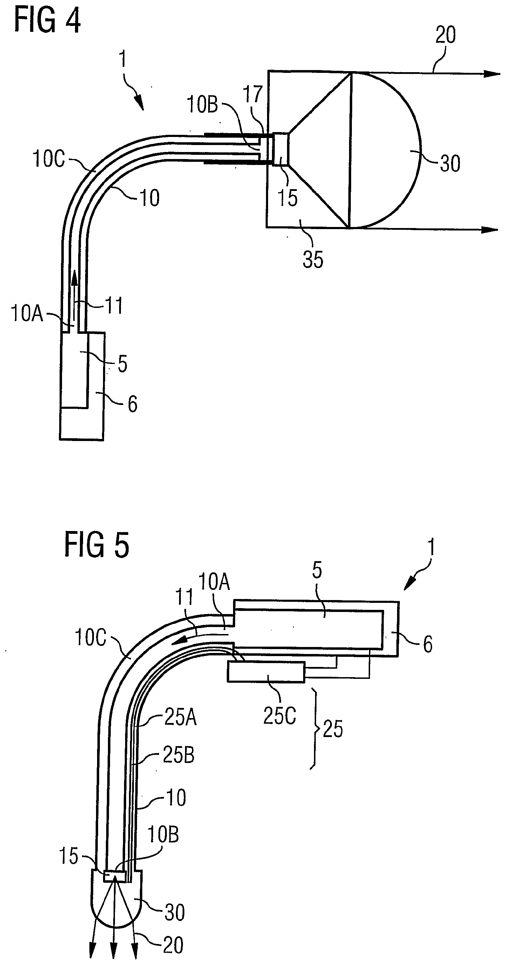

Figur 4 zeigt eine Licht emittierende Vorrichtung 1 gemäß eines Vergleichsbeispiels, bei der eine Strahlungsquelle 5, zum Beispiel ein UV-Diodenlaser, der thermisch leitfähig mit einer Wärmesenke 6 verbunden ist, UV-Strahlung 11 emittiert, die in einen Lichtleiter 10 eingekoppelt wird. Das von der UV-Strahlungsquelle 5 emittierte Licht 11 wird dabei an dem Ende 10A des Lichtleiter 10 eingekoppelt. Der Lichtleiter 10 umfasst auch einen Mantelbereich 10C. Die durch den Lichtleiter 10 transportierte UV-Strahlung 11 wird am zweiten Ende 10B des Lichtleiters 10 aus dem Lichtleiter 10 ausgekoppelt und von einem Konvertermaterial 15 in sichtbares Licht längerer Wellenlänge 20 konvertiert.

Der transparente Körper 35 ist mittels der Steckverbindung 17 an dem Lichtleiter 10 befestigt. Zwischen dem Lichtleiter und dem transparenten Körper befindet sich das Konvertermaterial 15, das auch auf dem Lichtleiter aufgebracht sein kann oder mittels einer Bohrung in dem transparenten Körper 35 (Glas- oder Kunststoffkörper) untergebracht sein kann. Dieser transparente Körper 35 ist transparent für das konvertierte Licht 20 und weist auf dessen Oberflächen vorteilhafterweise eine kurzwellige Strahlung absorbierende beziehungsweise kurzwellige Strahlung reflektierende Beschichtung auf (hier nicht gezeigt). Im Strahlengang ist ein optisches Bauteil 30, eine Linse dem transparenten Körper 35 nachgeschaltet. Das Konvertermaterial 15 befindet sich dabei vorteilhafterweise im Fokus (Brennpunkt) des optischen Bauteils 30, sodass das mit dem optischen Bauteil 30 wechselwirkende konvertierte Licht 20 parallel und gerichtet in eine Vorzugsrichtung abgestrahlt wird. Sowohl die Linse als auch der transparente Körper bedingen eine Aufweitung der an Ende 10B des Lichtleiters 10 auftretenden Punktlichtquelle. Das optische Bauteil 30 und der transparente Körper 35 können auch einstückig ausgeformt sein.

Figur 5 zeigt eine Licht emittierenden Vorrichtung gemäß eines Vergleichsbeispiels, bei der eine Detektionsvorrichtung 25 vorhanden ist, die eine Beschädigung des Lichtleiters 10 detektieren kann. Dabei verlaufen zueinander parallel im Mantelbereich 10C des Lichtleiters 10 eine erste elektrische Verbindung 25A als Draht und eine zweite elektrisch leitfähige Verbindung 25B ebenfalls als Draht ausgebildet. Beide elektrisch leitfähigen Verbindungen 25A und 25B sind zu einem Stromkreis zusammengeschlossen und stehen in elektrischen Kontakt mit dem Mittel 25C zur Überprüfung der Funktionsfähigkeit der elektrisch leitfähigen Verbindung. Der Figur 2 kann entnommen werden, dass diese Mittel 25C, beispielsweise eine Transistorschaltung, gleichzeitig die Energieversorgung für die Strahlungsquelle 5 kontrollieren. Wenn aufgrund einer Beschädigung des Lichtleiters 10 der geschlossene Stromkreis aus den elektrisch leitfähigen Verbindungen 25A und 25B unterbrochen wird, kann somit auch sofort die Energieversorgung für die Strahlungsquelle 5 abgeschaltet und damit die Emission von potentiell schädlicher kurzwelliger Strahlung 11 aus der Licht emittierenden Vorrichtung 1 heraus verhindert werden. Dem Konvertermaterial 15 schließt sich direkt eine Linse als optisches Bauteil 30 an, die für eine gerichtete Bündelung und Abstrahlung des konvertierten Lichts 20 sorgt.

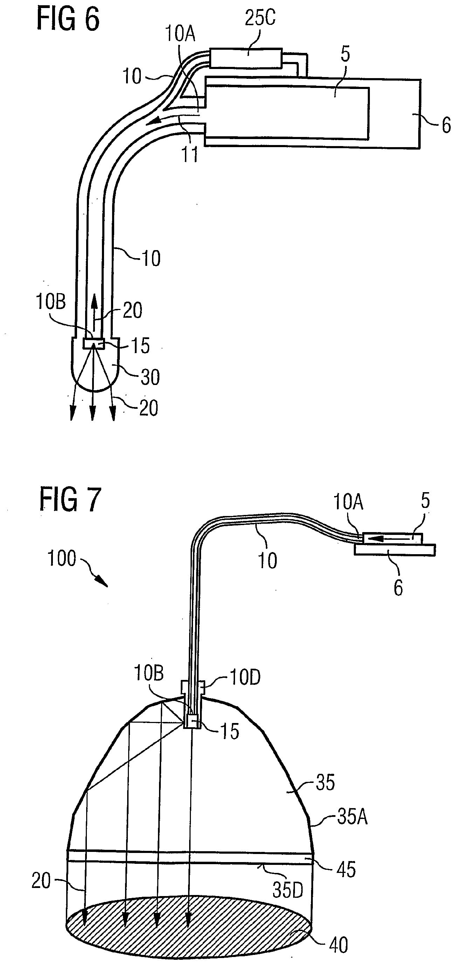

Die in Figur 6 dargestellte erfindungsgemäße Licht emittierende Vorrichtung 1 weist eine Detektionsvorrichtung 25C auf, die eine Beschädigung des Lichtleiters 10 detektieren kann. In diesem Fall wird ein Lichtleiterbündel verwendet, wobei das Ende 10A eines Lichtleiters 10 des Bündels mit einem Detektor 25C für sichtbares Licht lichtleitend verbunden ist. Die Strahlungsquelle 5 emittiert kurzwellige Strahlung 11, die an dem Ende 10A des Lichtleiterbündels eingekoppelt wird in den Lichtleiter und am anderen Ende 10B des Lichtleiters 10, mittels des Konvertermaterials 15 in sichtbares Licht längerer Wellenlänge 20 konvertiert wird. Es ist zu erkennen, dass ein Teil des konvertierten sichtbaren Lichts 20 von einer Linse als optisches Bauteil 30 fokussiert und gerichtet aus der Licht emittierenden Vorrichtung ausgestrahlt wird. Ein anderer Teil des konvertierten Lichts 20 wird von der Konvertermaterialschicht 15 in den Lichtleiter 10 rückgekoppelt und kann dabei dann von dem Detektor 25C detektiert werden. Dieser Detektor 25C kontrolliert ebenfalls die Energieversorgung der Strahlungsquelle 5 (UV-Laserdiode) und kann bei fehlender Detektion des sichtbaren konvertierten Lichts 20 die Stromversorgung abschalten, sodass eine weitere Emission von UV-Licht aus dem Laser unterbunden wird.

Anstatt von Bündelungs- oder Fokussierungsoptiken können auch defokussierte Optiken, Zerstreu-Linsen oder -Linsensysteme sowie einstellbare Zoomoptiken bei erfindungsgemäßen Licht emittierenden Vorrichtungen verwendet werden.

Figur 7 zeigt eine Beleuchtungseinrichtung 100, in der eine Licht emittierende Vorrichtung gemäß einer Ausführungsform der Erfindung integriert ist. Auch in diesem Fall wird die von der Strahlungsquelle 5 emittierte kurzwellige Strahlung in einen Lichtleiter 10 an dem einen Ende 10A des Lichtleiters eingekoppelt und nach Transport durch den Lichtleiter 10 am anderen Ende 10B des Lichtleiters mittels eines Konvertermaterials 15 in konvertiertes sichtbares Licht umgewandelt. Das Konvertermaterial 15 befindet sich direkt an dem Ende 10B des Lichtleiters 10, um die unbeabsichtigte Emission kurzwelliger Strahlung zu minimieren. Das konvertierte sichtbare Licht 20 wird in den transparenten Körper 35 beispielsweise einen Vollglaskörper eingekoppelt und wird durch die spiegelnde Beschichtung 35A auf der Oberfläche des transparenten Körpers 35 reflektiert, sodass eine gerichtete Abstrahlung des konvertierten Lichts auf eine zu beleuchtende Fläche 40 erfolgt. Der transparente Körper 35 weist dabei eine Parabolform auf. Das Konvertermaterial 15 befindet sich im Brennpunkt dieses Parabolspiegels, um eine besonders gute Fokussierung der konvertierten Strahlung zu erreichen. Weiterhin ist an der Lichtaustrittsfläche 35D des transparenten Körpers 35 eine kurzwellige Strahlung reflektierende Beschichtung 45 angeordnet, die die unbeabsichtigte Emission von nicht konvertierter kurzwelliger Strahlung verhindert. Der transparente Körper 35 kann auch ein Hohlkörper sein, zum Beispiel ein gekrümmter Spiegel. Dieser Hohlkörper kann dann auf der Lichtaustrittsfläche 35D einen für sichtbares Licht transparenten Deckel aufweisen, der mit der kurzwelligen Strahlung reflektierenden Beschichtung 45 beschichtet ist. Die kurzwellige Strahlung reflektierende Beschichtung 45 kann beispielsweise ein dielektrischer Spiegel sein, der auf die Wellenlänge der kurzwelligen Strahlungsquelle abgestimmt ist. Die spiegelnde Beschichtung 35A kann eine verspiegelte Fläche sein oder eine Totalreflexion der konvertierten Strahlung mittels Brechungsindexsprung ermöglichen oder auch eine Kombination einer verspiegelten Fläche mit einem Brechungsindexsprung umfassen. Es ist beispielsweise möglich, dass ein Teilbereich verspiegelt ist und ein anderer Teilbereich flache Lichteinfallswinkel aufweist und deshalb verlustfrei durch Brechungsindexsprung reflektiert. Weiterhin ist auch eine niederbrechende Zwischenschicht unter der spiegelnden Beschichtung 35A möglich. Die geometrische 3D-Form des transparenten Körpers 35 kann weiterhin so ausgestaltet sein, dass die Parabelkrümmung in zwei zueinander um die optische Achse gedrehten Schnittebenen verschieden sind, wodurch sich dann eine elliptische Lichtverteilung ergibt.

Derartige Beleuchtungseinrichtungen 100 können einen scharfen Lichtfleck 40 erzeugen und können beispielsweise als Leseleuchten, Scheinwerfer, auch Theaterscheinwerfer und Spotlights eingesetzt werden.

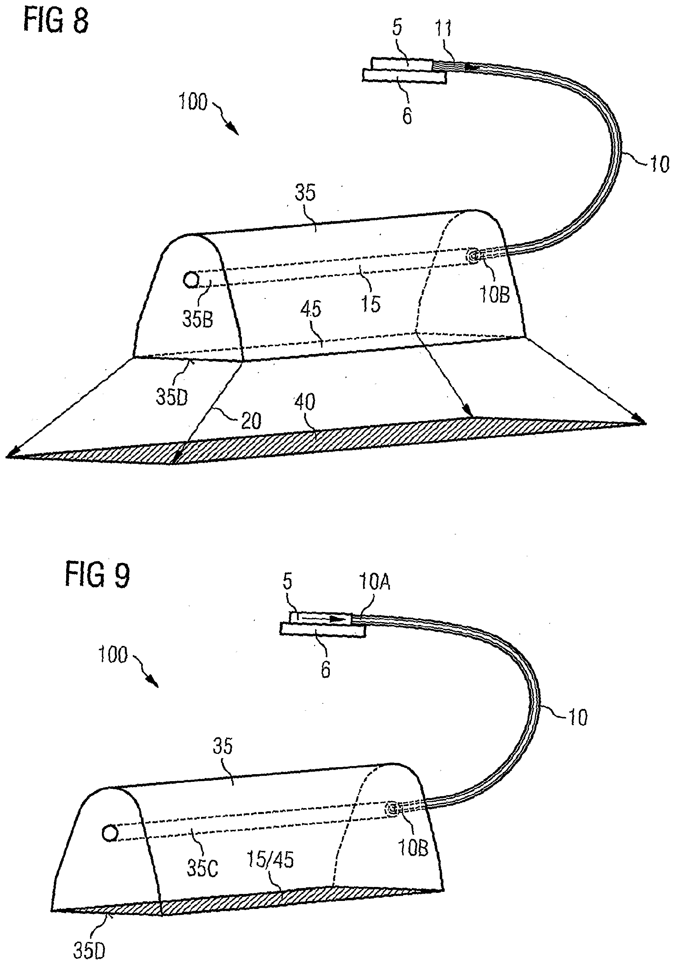

Im Gegensatz zur Beleuchtungseinrichtung 100 der Figur 7 wird bei der Beleuchtungseinrichtung 100, die in Figur 8 dargestellt ist, eine rechteckige zu beleuchtende Fläche 40 beleuchtet. In diesem Fall weist der transparente Körper 35 eine lang gezogene Parabelform auf, die zum Beispiel eine Lichtaustrittsfläche 35D mit einem rechteckigen Querschnitt aufweist. Deutlich ist zu erkennen, dass die geometrische Form der Lichtaustrittsfläche 35D auch weitestgehend die geometrische Form der zu beleuchtenden Fläche 40 bestimmt, wobei die zu beleuchtende Fläche 40 etwas lang gestreckter ist als die Lichtaustrittsfläche 35D. Auch bei dieser Beleuchtungseinrichtung 100 wird die kurzwellige Strahlung 11 über einen Lichtleiter transportiert und an dem Ende 10B des Lichtleiters 10 in den transparenten Körper 35 eingekoppelt. In dem transparenten Körper 35 befindet sich dabei eine Bohrung, die entlang der Hauptachse des transparenten Körpers 35 verläuft und mit Konvertermaterial 15 gefüllt ist, das die kurzwellige Strahlung 11 in sichtbares Licht 20 konvertiert. Dieses Konvertermaterial 15 kann beispielsweise Nanopartikel umfassen, da bei diesen die Lichtstreuung vermindert wird und so die Leuchtstärke der Bohrung mit dem Konverter gleichmäßiger wird. An der Oberfläche dieses transparenten Körpers 35 kann dann das konvertierte sichtbare Licht 20 beispielsweise mittels Brechungsindexsprung oder durch eine Spiegelbeschichtung oder beides reflektiert und durch die Lichtaustrittsfläche 35D ausgekoppelt werden. Die Lichtaustrittsfläche 35D des transparenten Körpers 35 mit einer kurzwelligen Strahlung reflektierenden Beschichtung 45 versehen, die die Emission nicht-konvertierter kurzwelliger Strahlung verhindert.

Durch diese Anordnung kann ein wohl definierter Leuchtstrich gebildet werden, der gleichzeitig eine gleichmäßige Helligkeit durch die Nanopartikel umfassenden Konvertermaterialien ermöglicht. Weiterhin können scharfe Hell-Dunkel-Grenzen durch Positionierung dieser stabartigen Beleuchtungseinrichtung 100 in dem Parabolkörper erzielt werden.

Figur 9 zeigt eine ähnliche Beleuchtungseinrichtung 100, wie die in Figur 8 gezeigte Beleuchtungseinrichtung. In Figur 9 befindet sich in der Bohrung im transparenten Körper 35 ein lichtleitendes Medium 35C, zum Beispiel ein Glasstab oder eine Glasfaser, das lichtleitend mit dem Ende 10B des Lichtleiters 10 verbunden ist. Das Licht leitende Medium kann wie bereits gesagt ein Glasstab sein, der eine Konverterbeschichtung aufweist. Der Glasstab kann beispielsweise weniger als 1 mm dick sein, zum Beispiel unter 100 µm. Bei der Verwendung von Laserdioden als Strahlungsquelle 5 und aufgrund der geringen Abmessungen des Leuchtstabes kann eine sehr kompakte Beleuchtungseinrichtung 100 bei besonders hoher Leuchtdichte verwirklicht werden. Derartige Beleuchtungseinrichtungen können beispielsweise auch als Displayhinterleuchtung mit hoher Einkoppeleffizienz in die Hinterleuchtungsplatte, zum Beispiel bei Laptops, verwendet werden.

Es ist auch möglich, dass das lichtleitende Medium 25C kein Konvertermaterial umfasst. Auch bei einer derartigen Anordnung kann die Lichtaustrittsfläche 35D vorzugsweise auch aufgeraut sein oder Streuzentren enthalten und somit selbst eine sekundäre Leuchtfläche sein. Eine derartige Ausführung ist dann vorteilhaft, wenn eine Freiformleuchtfläche benötigt wird, die gegebenenfalls optisch auf zu beleuchtenden Flächen oder Gegenständen abgebildet werden kann. Das Licht leitende Medium 35C kann bevorzugt auf dessen Oberfläche ebenfalls aufgeraut sein (aufgerauter Stab oder Faser) oder Streuzentren enthalten und dadurch die Lichtauskopplung aus dem Licht leitenden Medium verbessert werden. Die kurzwellige Strahlung reflektierende Beschichtung kann dann auch zusammen mit der Konverterbeschichtung 15 und 45 auf der Lichtaustrittsfläche 35D angeordnet sein.

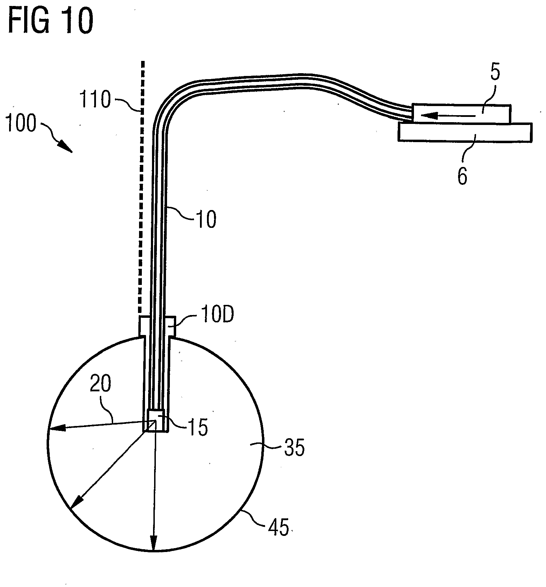

Figur 10 zeigt eine Deckenbeleuchtungseinrichtung 100, bei der eine Leuchtenaufhängung 110 zur Befestigung an der Decke vorhanden ist. In diesem Fall wird das durch den Lichtleiter 10 transportierte kurzwellige Licht am Ende des Lichtleiters mittels des Konvertermaterials 15 in sichtbares Licht 20 konvertiert und dann in einen kugelförmigen transparenten Körper 35, der entweder ein Vollkörper oder ein Hohlkörper sein kann, eingekoppelt. Weiterhin ist noch eine Lichtleiterbefestigung 10D am transparenten Körper 35 vorhanden. Auf der äußeren Oberfläche dieses transparenten Kugelkörpers kann sich dann eine kurzwellige Strahlung reflektierende Beschichtung 45 befinden, die nicht konvertiertes kurzwelliges Licht reflektiert.

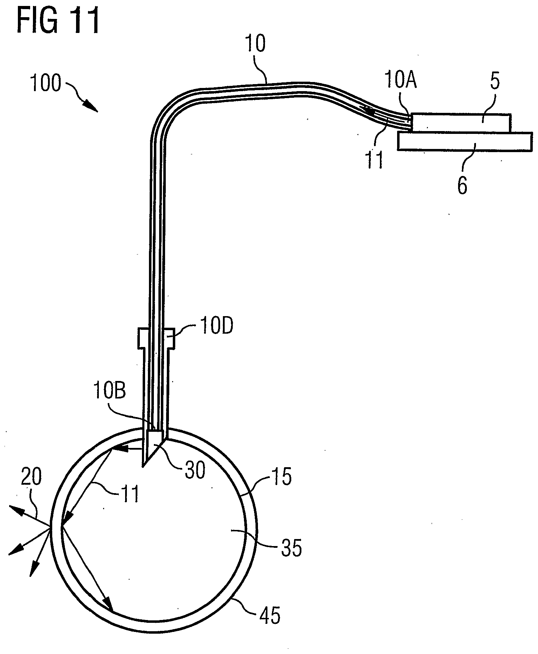

Bei der Deckenbeleuchtungseinrichtung 100 der Figur 11 wird die kurzwellige Strahlung 11 am Ende 10A des Lichtleiters 10 mittels eines optischen Bauteils 30, das eine Streulinse oder Streuoptik umfassen kann, in den transparenten Körper 35 eingekoppelt, der wieder ein Hohl- oder ein Vollkugelkörper sein kann und beispielsweise aus Glas oder Kunststoff bestehen kann. Im Falle eines Hohlkörpers ist es beispielsweise möglich, dass auf der inneren Oberfläche des Hohlkörpers 35 ein Konvertermaterial 15 angeordnet ist, das das kurzwellige Licht 11 in konvertiertes Licht 20 umwandelt. Auf der äußeren Oberfläche dieser Hohlkugel kann dann eine kurzwellige Strahlung reflektierende Beschichtung 45 vorhanden sein, die nicht konvertierte kurzwellige Strahlung reflektiert beziehungsweise absorbiert. Aus diesem Körper 35 kann dann konvertiertes Licht 20 ausgekoppelt werden und so beispielsweise eine Pendelbeleuchtung verwirklicht werden. Der Vorteil dieser Deckenbeleuchtungseinrichtung 100 besteht darin, dass die Bestrahlungsdichte des Konvertermaterials 15 niedriger ist im Vergleich zu einer Anordnung bei der dieses Material 15 direkt am Ende 10A des Lichtleiters 10 angeordnet ist. Dadurch kann eine höhere Konversionseffizienz erreicht werden.

Das optische Bauteil 30 kann auch ein Umlenkprisma umfassen, das für eine Einstrahlung der kurzwelligen Strahlung unter einem flachen Winkel sorgt, so dass diese häufig an der kurzwelligen Strahlung reflektierenden Beschichtung zurück in den transparenten Körper 35 reflektiert wird, so dass nach der Konversion eine gleichmäßigere Ausleuchtung erreicht wird.

Weiterhin ist es bei allen genannten Ausführungsformen möglich, dass das Konvertermaterial bzw. die Konverter-Nanopartikel im Volumen des transparenten Körpers 35 angeordnet sind, wenn dieser ein Vollkörper ist.

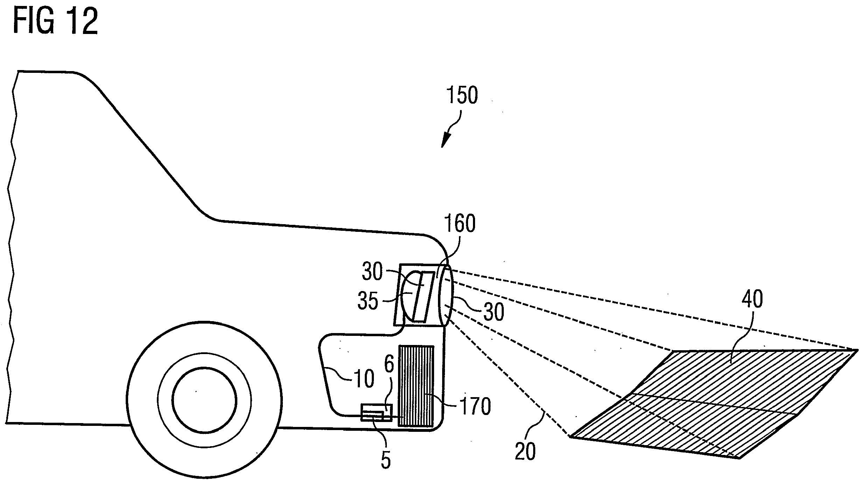

Figur 12 zeigt ein Fahrzeug 150 mit einem Scheinwerfer 160, der eine Licht emittierende Vorrichtung 1 nach einer Ausführungsform der Erfindung enthält. Dabei ist zu erkennen, dass im Scheinwerfer 160 der transparente Körper 35 angeordnet ist sowie optional weitere optische Bauteile 30, die für eine gerichtete Abstrahlung der erzeugten Strahlung 20 sorgen. Weiterhin ist ein Kühlkörper 170 vorhanden, der zur Kühlung des Motors dient, wobei dann besonders vorteilhaft die Strahlungsquelle 5 mit der Wärmesenke 6 so nah an der Kühlung 170 angeordnet ist, dass eine thermische Kopplung erfolgt und die Kühlung 170 auch die Strahlungsquelle 5 kühlt.

Die Erfindung beschränkt sich nicht auf die hier dargestellten Ausführungsformen. Insbesondere können die bei bestimmten Ausführungsformen gezeigten Merkmale auch in den anderen Ausführungsformen implementiert werden. Weitere Variationen sind beispielsweise auch hinsichtlich der geometrischen Ausgestaltung des transparenten Körpers 35 möglich. Anstatt von kurzwelligen Strahlungsquellen können z. B. auch Strahlungsquellen eingesetzt werden, die sichtbares Licht ausstrahlen, das dann dementsprechend konvertiert wird.

## Patentansprüche

1. Anordnung, ausgebildet als lichtemittierende Vorrichtung (1) mit einem Lichtleiter (10) und einer Detektionsvorrichtung (25), wobei
- der Lichtleiter (10) einen Kernbereich (10E) und einen den Kernbereich (10E) umgebenden Mantelbereich (10C) umfasst, wobei der Kernbereich einen höheren Brechungsindex aufweist als der Mantelbereich, und
- bei der die Detektionsvorrichtung (25) eine Beschädigung des Lichtleiters (10) detektieren kann,
- wobei der Lichtleiter ein erstes Ende (10A) und ein zweites Ende (10B) aufweist, wobei am zweiten Ende (10B) ein Konvertermaterial (15) vorhanden ist, das durch den Lichtleiter (10) transportierte Strahlung (11) einer ersten Wellenlänge in Licht (20) einer zweiten Wellenlänge konvertiert, und am ersten Ende (10A) ein erster Detektor als Bestandteil der Detektionsvorrichtung (25) vorhanden ist, der das Licht (20) der zweiten Wellenlänge detektiert,
- eine Strahlungsquelle (5) am ersten Ende (10A) des Lichtleiters (10) vorhanden ist, die die Strahlung (11) der ersten Wellenlänge emittiert,
- ein Teil des Lichts (20) der zweiten Wellenlänge durch optische Rückkopplung durch den Lichtleiter (10) transportiert wird, **dadurch gekennzeichnet, dass** die Detektionsvorrichtung (25) Bestandteil einer Schaltungsanordnung ist, die eine Energieversorgung der Strahlungsquelle (5) mit Strom versorgt, und die dazu eingerichtet ist bei fehlender Detektion des konvertierten Lichts einen Stromkreis zu unterbrechen, und wobei die lichtemittierende Vorrichtung (1) ein Licht emittiert, das eine Mischung aus Strahlung (11) der ersten Wellenlänge und aus dem konvertierten Licht (20) der zweiten Wellenlänge ist oder konvertiertes Licht (20) der zweiten Wellenlänge ist.

2. Anordnung nach dem vorhergehenden Anspruch,
- bei dem eine erste elektrisch leitfähige Verbindung (25A) als Bestandteil der Detektionsvorrichtung vorhanden ist, die im oder auf dem Mantelbereich (10C) des Lichtleiters (10) verläuft, wobei die Funktionsfähigkeit dieser ersten elektrisch leitenden Verbindung die Funktionsfähigkeit des Lichtleiters anzeigt.

3. Anordnung nach dem vorhergehenden Anspruch,
- bei der der Lichtleiter (10) eine Hauptachse aufweist,
- bei der die erste elektrisch leitfähige Verbindung (25A) entlang der Hauptachse des Lichtleiters (10) verläuft.

4. Anordnung nach einem der vorhergehenden Ansprüche 2 oder 3,
- bei dem die erste elektrisch leitfähige Verbindung (25A) spröder ist als der Kernbereich (10E).

5. Anordnung nach einem der Ansprüche 2 bis 4,
- bei der zusätzlich eine zweite elektrisch leitfähige Verbindung (25B) vorhanden ist, die im oder auf dem Lichtleiter (10) verläuft.

6. Anordnung nach dem vorhergehenden Anspruch,
- bei der die zweite elektrisch leitfähige Verbindung (25B) mit der ersten elektrisch leitfähigen Verbindung (25A) einen Stromkreis bildet und
- Mittel (25C) zur Überprüfung der Funktionsfähigkeit dieser ersten elektrisch leitenden Verbindung vorhanden sind, die den im Stromkreis fließenden Strom detektieren können.

7. Anordnung nach Anspruch 5,
- bei der die zweite elektrisch leitfähige Verbindung (25B)mit Abstand zu der ersten elektrisch leitfähigen Verbindung (25A) verläuft, und
- Mittel (25C) zur Überprüfung der Funktionsfähigkeit dieser ersten elektrisch leitenden Verbindung vorhanden sind, die eine zwischen der ersten und zweiten elektrischen Verbindung anliegende Spannung detektieren können.

8. Anordnung nach Anspruch 1,
- bei der am zweiten Ende (10B) zwischen dem Konvertermaterial (15) und dem Lichtleiter (10) eine Reflexionsschicht angebracht ist, welche für die Strahlung (11) der ersten Wellenlänge transparent ist, aber einen Teil des Lichtes (20) der zweiten Wellenlänge reflektiert.

9. Lichtemittierende Vorrichtung (1) nach einem der vorhergehenden Ansprüche,
- bei der die Strahlungsquelle eine kurzwellige Strahlungsquelle, insbesondere eine UV-Laserdiode umfasst.

10. Anordnung nach einem der vorhergehenden Ansprüche,
- bei der der Lichtleiter (10) Fasern umfasst, die ein Material enthalten, das ausgewählt ist aus:
- Glas und Kunststoff.

11. Anordnung nach einem der vorherigen Ansprüche,
- bei der der Lichtleiter ein erstes Ende (10A) und ein zweites Ende (10B) aufweist, wobei am zweiten Ende (10B) ein optisches Bauteil (30) vorhanden ist, das mit dem konvertierten Licht (20) oder mit der aus dem Lichtleiter austretenden Strahlung (11) wechselwirkt.

12. Anordnung nach dem vorhergehenden Anspruch,
- bei der ein Ende (10B) des Lichtleiters (10) lichtleitend mit einem transparenten Körper (35) verbunden ist.

## Claims

1. An arrangement embodied as a light-emitting device (1), comprising a fiber-optic waveguide (10) and a detection device (25), wherein
- the fiber-optic waveguide (10) comprises a core region (10E) and a cladding region (10C) surrounding the core region (10E), wherein the core region has a higher refractive index than the cladding region, and
- wherein the detection device (25) can detect damage to the fiber-optic waveguide (10)
- wherein the fiber-optic waveguide has a first end (10A) and a second end (10B), wherein a converter material (15) is present at the second end (10B), which converter material converts radiation (11) having a first wavelength that is transported through the fiber-optic waveguide (10) into light (20) having a second wavelength, and a first detector as part of the detection device is present at the first end (10A), which detector detects the light (20) having the second wavelength,
- a radiation source (5) is present at the first end (10A) of the fiber-optic waveguide (10), which radiation source emits radiation (11) having a first wavelength,
- part of the light (20) having the second wavelength is transported by optical feedback through the fiber-optic waveguide (10), **characterized in that**
- the detection device (25) is part of a circuit arrangement that supplies a power supply of the radiation source (5) with current and which is configured to interrupt an electric circuit in the absence of detection of the converted light,
- and wherein the light-emitting devices (1) emits light which is a mixture of radiation (11) having the first wavelength and converted light (20) having the second wavelength or which is converted light (20) having the second wavelength.

2. The arrangement as claimed in the preceding claim,
- wherein a first electrically conductive connection (25A) is present as part of the detection device, which runs in or on the cladding region (10C) of the fiber-optic waveguide (10), wherein the functionality of said first electrically conductive connection indicates the functionality of the fiber-optic waveguide.

3. The arrangement as claimed in the preceding claim,
- wherein the fiber-optic waveguide (10) has a principal axis,
- wherein the first electrically conductive connection (25A) runs along the principal axis of the fiber-optic waveguide (10).

4. The arrangement as claimed in either of the preceding claims 2 and 3,
- wherein the first electrically conductive connection (25A) is more brittle than the core region (10E).

5. The arrangement as claimed in any of claims 2 to 4,
- wherein a second electrically conductive connection (25B) is additionally present, which runs in or on the fiber-optic waveguide (10).

6. The arrangement as claimed in the preceding claim,
- wherein the second electrically conductive connection (25B) forms an electric circuit with the first electrically conductive connection (25A), and
- means (25C) for checking the functionality of said first electrically conductive connection are present, which can detect the current flowing in the electric circuit.

7. The arrangement as claimed in claim 5,
- wherein the second electrically conductive connection (25B) runs at a distance from the first electrically conductive connection (25A), and
- means (25C) for checking the functionality of said first electrically conductive connection are present, which can detect a voltage present between the first and second electrical connections.

8. The arrangement as claimed in claim 1,
- wherein a reflection layer is fitted at the second end (10B) between the converter material (15) and the fiber-optic waveguide (10), which reflection layer is transparent to the radiation (11) having the first wavelength, but reflects part of the light (20) having the second wavelength.

9. The light-emitting device (1) as claimed any of the preceding claims,
- wherein the radiation source comprises a short-wave radiation source, in particular a UV laser diode.

10. The arrangement as claimed in any of the preceding claims,
- wherein the fiber-optic waveguide (10) comprises fibers containing a material selected from:
- glass and plastic.

11. The arrangement as claimed in any of the preceding claims,
- wherein the fiber-optic waveguide has a first end (10A) and a second end (10B), wherein an optical component (30) is present at the second end (10B), which optical component interacts with the converted light (20) or with the radiation (11) emerging from the fiber-optic waveguide.

12. The arrangement as claimed in the preceding claim,
- wherein an end (10B) of the fiber-optic waveguide (10) is connected to a transparent body (35) in light-guiding fashion.

## Revendications

1. Arrangement, réalisé sous la forme d'un dispositif émetteur de lumière (1) comprenant un conducteur optique (10) et un dispositif de détection (25),
- le conducteur optique (10) comportant une zone d'âme (10E) et une zone d'enveloppe (10C) qui entoure la zone d'âme (10E), la zone d'âme présentant un indice de réfraction supérieur à celui de la zone d'enveloppe, et
- avec lequel le dispositif de détection (25) peut détecter un endommagement du conducteur optique (10),
- le conducteur optique possédant une première extrémité (10A) et une deuxième extrémité (10B), un matériau convertisseur (15) étant présent à la deuxième extrémité (10B), lequel convertit le rayonnement (11) à une première longueur d'onde transporté à travers le conducteur optique (10) en une lumière (20) à une deuxième longueur d'onde, et un premier détecteur en tant qu'élément constitutif du dispositif de détection (25) étant présent à la première extrémité (10A), lequel détecte la lumière (20) à la deuxième longueur d'onde,
- une source de rayonnement (5) étant présente à la première extrémité (10A) du conducteur optique (10), laquelle émet le rayonnement (11) à la première longueur,
- une partie de la lumière (20) à la deuxième longueur d'onde étant transportée à travers le conducteur optique (10) par réinjection optique,
**caractérisé en ce que**
le dispositif de détection (25) est un élément constitutif d'un arrangement de circuit qui alimente en courant une alimentation en énergie de la source de rayonnement (5) et qui est conçu pour interrompre un circuit électrique en cas d'échec de la détection de la lumière convertie, et le dispositif émetteur de lumière (1) émettant une lumière qui est un mélange du rayonnement (11) à la première longueur d'onde et de la lumière (20) convertie à la deuxième longueur d'onde, ou qui est la lumière (20) convertie à la deuxième longueur d'onde.

2. Arrangement selon la revendication précédente,
- avec lequel il existe une première liaison (25A) électriquement conductrice en tant qu'élément constitutif du dispositif de détection, laquelle s'étend dans ou sur la zone d'enveloppe (10C) du conducteur optique (10), l'aptitude fonctionnelle de cette liaison électriquement conductrice indiquant l'aptitude fonctionnelle du conducteur optique.

3. Arrangement selon la revendication précédente,
- avec lequel le conducteur optique (10) possède un axe principal,
- avec lequel la première liaison (25A) électriquement conductrice s'étend le long de l'axe principal du conducteur optique (10).

4. Arrangement selon l'une des revendications précédentes 2 ou 3,
- avec lequel la première liaison (25A) électriquement conductrice est plus cassante que la zone d'âme (10E).

5. Arrangement selon l'une des revendications précédentes 2 à 4,
- avec lequel il existe en plus une deuxième liaison (25B) électriquement conductrice, laquelle s'étend dans ou sur le conducteur optique (10).

6. Arrangement selon la revendication précédente,
- avec lequel la deuxième liaison (25B) électriquement conductrice forme un circuit électrique avec la première liaison (25A) électriquement conductrice et
- il existe des moyens (25C) pour contrôler l'aptitude fonctionnelle de cette première liaison électriquement conductrice, lesquels peuvent détecter le courant qui circule dans le circuit électrique.

7. Arrangement selon la revendication 5,
- avec lequel la deuxième liaison (25B) électriquement conductrice s'étend avec un certain écart de la première liaison (25A) électriquement conductrice, et
- il existe des moyens (25C) pour contrôler l'aptitude fonctionnelle de cette première liaison électriquement conductrice, lesquels peuvent détecter une tension appliquée entre la première et la deuxième liaison électriquement conductrice.

8. Arrangement selon la revendication 1,
- avec lequel une couche réfléchissante est appliquée à la deuxième extrémité (10B) entre le matériau convertisseur (15) et le conducteur optique (10), laquelle est transparente pour le rayonnement (11) à la première longueur, mais réfléchit une partie de la lumière (20) à la deuxième longueur d'onde.

9. Dispositif émetteur de lumière (1) selon l'une des revendications précédentes,
- avec lequel la source de rayonnement comprend une source de rayonnement à ondes courtes, notamment une diode laser à UV.

10. Arrangement selon l'une des revendications précédentes,
- avec lequel le conducteur optique (10) comprend des fibres qui contiennent un matériau qui est choisi parmi :
- le verre et le plastique.

11. Arrangement selon l'une des revendications précédentes,
- avec lequel le conducteur optique possède une première extrémité (10A) et une deuxième extrémité (10B), un composant optique (30) étant présent à la deuxième extrémité (10B), lequel interagit avec la lumière convertie (20) ou avec le rayonnement (11) sortant du conducteur optique.

12. Arrangement selon la revendication précédente,
- avec lequel une extrémité (10B) du conducteur optique (10) est reliée avec conduction optique à un corps transparent (35).
